# EUROPÄISCHE PATENTSCHRIFT

(11) **EP 3 137 537 B1**
(45) Veröffentlichungstag und Bekanntmachung des Hinweises auf die Patenterteilung: **24.01.2018**
(21) Anmeldenummer: 15718868.1
(22) Anmeldetag: 24.04.2015
(51) Int. Cl.: C08J 5/24, B29C 70/00, C08G 18/00

(54) **FASERVERBUNDBAUTEILE UND DEREN HERSTELLUNG**
FIBRE CONTAINING COMPOSITES AND PROCESSES FOR ITS PRODUCTION
COMPOSANT COMPOSITE EN FIBRE ET SA FABRICATION

(30) Priorität: 28.04.2014 EP 14166254
(43) Veröffentlichungstag der Anmeldung: 08.03.2017
(73) Patentinhaber: Covestro Deutschland AG, 51373 Leverkusen (DE)
(72) Erfinder: SCHORNSTEIN, Marcel, 41462 Neuss (DE); HUPKA, Florian, 40589 Düsseldorf (DE); WEGENER, Dirk, 40789 Monheim (DE); RASSELNBERG, Harald, 41541 Dormagen (DE)
(74) Vertreter: Levpat
(86) Internationale Anmeldenummer: PCT/EP2015/058949
(87) Internationale Veröffentlichungsnummer: WO 2015/165823

(56) Entgegenhaltungen:
- WO-A1-2012/163845
- DE-A1- 4 416 323
- US-A- 5 973 099
- US-A1- 2004 094 859
- US-B1- 6 448 364

## Beschreibung

Die vorliegende Erfindung betrifft Faserverbundbauteile, die z.B. durch Tränken von Fasern mit Polyurethanreaktivharzmischungen aus Polyisocyanaten, Polyolen, thermolatenten Katalysatoren sowie gegebenenfalls Additiven erhältlich sind, sowie ein Verfahren zu deren Herstellung.

Faserverbundmaterialien auf Kunststoffbasis werden häufig als Konstruktionsmaterial verwendet, da diese eine hohe mechanische Festigkeit verbunden mit geringem Gewicht aufweisen. Dabei besteht das Matrixmaterial üblicherweise aus ungesättigten Polyesterharzen, Vinylesterharzen oder Epoxidharzen.

Faserverbundwerkstoffe können beispielsweise im Flugzeugbau, im Automobilbau oder in Rotorblättern von Windkraftanlagen eingesetzt werden.

US 5973099 A beschreibt die Herstellung von kompakten Polyurethanen mit einer thermolatenten Reaktionsharzmischung. Die kompakten Polyurethane werden bevorzugt im RTM-Verfahren hergestellt und weisen aufgrund der Verwendung von Polyolen basierend auf langkettigen Fettsäurederivaten eine geringe Wasseraufnahme und daher verbesserte Mechaniken auf. Nachteilig ist, dass die Hitzeformbeständigkeit der Matrix sehr niedrig ist. Außerdem muss die Form vor ihrer Verwendung für eine ausreichende Entformbarkeit mit einem externen Trennmittel eingetrennt werden. Zudem besitzt das System Aushärtezeiten von > 10 Minuten bei gegebener Verarbeitungstemperatur.

WO 2012163845 A1 beschreibt die Herstellung von Faserverbundbauteilen, die durch Tränken von Fasern mit einer Reaktionsharzmischung aus Polyisocyanaten, Dianhydrohexitolen, Polyolen und ggf. Additiven erhältlich sind, sowie ein Verfahren zu deren Herstellung. Bevorzugt wird hier das Vacuum Assisted Resin Transfer Molding (VARTM)- und das Resin Transfer Molding (RTM)- Verfahren verwendet. Nachteil bei den Reaktionsharzgemischen ist, dass sie eine sehr lange Topfzeit bei 35 °C besitzen und die Viskosität nur sehr langsam ansteigt. Selbst bei 80 °C ist ein Aushärten der Reaktionsmatrix über mehrere Stunden notwendig.

DE 4416323 A beschreibt wärmehärtbare Reaktionsharzgemische, die organische Polyisocyanate, Epoxidgruppen aufweisende organische Verbindungen und Gemische aus bestimmten tertiären Aminen (Katalysatoren) enthalten. Die Reaktionsharzgemische werden bei Temperaturen bis zu 80°C angehärtet und bei Temperaturen von 100 bis 200 °C nachgehärtet. Nachteil bei diesen Reaktionsharzgemischen ist, dass sie erst bei hohen Temperaturen aushärten und lange Zykluszeiten haben, was wiederum zu hohen Energie- und Herstellungskosten führt.

Die Herstellung von Faserverbundmaterialien nach dem bevorzugten RTM-Verfahren kann prinzipiell in fünf Stufen eingeteilt werden: 1. Formvorbereitung (z.B. Polieren der Form, Applikation des externen Trennmittels), 2. Injektion des Reaktionsharzes in die Form, 3. Aushärtung des Reaktionsharzes in der Form, 4. Nachbehandlung der entformten Faserverbundbauteile durch z.B. Tempern, Oberflächenreinigung etc., 5. Lackierung, Kaschierung oder Aufbringen einer Dekorschicht.

US 20040094859 A1 beschreibt Polyisocyanuratsysteme zur Herstellung von Faserverbundbauteilen nach dem Pultrusionsverfahren. Die darin beschriebenen Polyisocyanuratsysteme sind mit internem Trennmittel ausgestattet. Beim Pultrusionsverfahren nutzt man durch die Einbringung von internen Trennmitteln eine Phaseninstabilität, damit die Pultrudate durch die beheizte Form geführt werden können und darin nicht verkleben. Aufgrund dieser Phaseninstabilität können derartige Polyisocyanuratsysteme für die Herstellung von Faserverbundbauteilen nach dem RTM-Verfahren nicht verwendet werden. Zudem besitzen Polyisocyanuratsysteme ohne ein anschließendes Tempern der Bauteile bei hohen Temperaturen nur einen geringen NCO-Umsatz von < 90%.

Bei den bisher eingesetzten Reaktionsharzen liegt der Nachteil darin, dass vor jeder Herstellung eines Faserverbundbauteils die Form zunächst gereinigt und anschließend wieder aufwändig mit einem externen Trennmittel eingetrennt werden muss. Gerade bei komplexen Bauteilen ist dies ein kostenintensiver Schritt. Zudem haben die bisher eingesetzten Reaktionsharze den Nachteil, dass es sehr lange dauert, bis die Reaktivharzmischung ausgehärtet ist, was zu einer geringen Produktivität führt. Zur Erhöhung der Produktivität ist es nötig, die Zykluszeit bei der Herstellung zu verringern. Dabei ist es wichtig, dass das Reaktionsharzgemisch lange dünnflüssig ist, um die Fasern komplett zu tränken, insbesondere bei großen Formteilen. Auf der anderen Seite sollte die Härtezeit möglichst kurz sein, um die Zykluszeit zu verringern. Aus wirtschaftlichen Gründen ist eine niedrige Aushärtetemperatur wünschenswert, da sich dadurch Energiekosten sparen lassen.

Aufgabe der vorliegenden Erfindung war es daher, ein Polyurethan-Matrixmaterial zur Verfügung zu stellen, das mit internem Trennmittel derart ausgestattet ist, dass Faserverbundbauteile ohne den Einsatz von externen Trennmitteln hergestellt werden können, welches zudem phasenstabil ist, ein bei erhöhten Temperaturen thermolatentes Reaktionsverhalten aufweist, also zunächst lange dünnflüssig ist (eine lange Topfzeit besitzt), um eine gute Tränkung und Benetzung der Fasern zu ermöglichen, aber anschließend sehr schnell Viskosität aufbaut ("snap-cure") und dessen Bauteil unmittelbar nach der Herstellung ohne aufwändige Nachbehandlung eine Lackierung, Kaschierung oder Aufbringen einer Dekorschicht erlaubt. Um eine weitere Reaktion mit z.B. Luftfeuchtigkeit zu vermeiden, ist ein Reaktionsumsatz (NCO-Umsatz) des Matrixmaterials von mindestens 90% direkt nach der Entformung des Bauteils wünschenswert.

Die Aufgabe konnte überraschenderweise durch Faserverbundbauteile gelöst werden, die aus Fasern und Reaktionsharzmischungen aus speziellen Polyisocyanaten, Polyolen, thermolatenten Katalysatoren sowie gegebenenfalls Additiven erhältlich sind, wobei die Polyolseite mit internem Trennmittel ausgestattet ist.

Gegenstand der Erfindung sind Faserverbundbauteile auf Polyurethanbasis enthaltend eine oder mehrere Faserschichten, die jeweils mit Polyurethan getränkt sind, wobei das Polyurethan erhältlich ist aus einem Reaktionsgemisch bestehend aus
A) einem oder mehreren organischen NCO-Prepolymeren mit einem NCO-Gehalt von 27 bis 31 Gew.-% und einem Monomergehalt von 35 bis 55 Gew.-% aus der Gruppe bestehend aus Reaktionsprodukten aus aliphatischen, cycloaliphatischen und/oder aromatischen Di- und/oder Polyisocyanaten und 5 bis 7,5 Gew.-%, bezogen auf Komponente A), Estergruppen aufweisenden Kondensationsprodukten mit jeweils einem zahlenmittleren Molekulargewicht von 650 bis 3000 g/mol, einer Säurezahl von unter 5, einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di und/oder Tricarbonsäuren mit jeweils zahlenmittleren Molekulargewichten von 50 bis 500 g/mol und/oder deren Derivaten und einem oder mehreren ein- oder mehrwertigen Alkoholen mit jeweils einem zahlenmittleren Molekulargewicht bis 500 g/mol und jeweils einer zahlenmittleren Funktionalität von 1,5 bis 6
B) einer Komponente enthaltend ein oder mehrere Polyole mit jeweils einem zahlenmittleren Molekulargewicht von 62 bis 3000 g/mol und jeweils einer zahlenmittleren Funktionalität von 1,8 bis 6
C) zwei oder mehreren thermolatenten Katalysatoren und
D) gegebenenfalls Additiven,
dadurch gekennzeichnet, dass die Komponente B) 2,5 bis 3,5 Gew.-%, bezogen auf Komponente B), internes Trennmittel enthält und das interne Trennmittel ausgewählt ist aus der Gruppe bestehend aus Estergruppen aufweisenden Kondensationsprodukten mit jeweils einem zahlenmittleren Molekulargewicht von 650 bis 3000 g/mol, einer Säurezahl von unter 5 und einer Hydroxylzahl von 28 bis 112 und jeweils einer Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils einem zahlenmittleren Molekulargewicht von 50 bis 500 g/mol und/oder deren Derivaten und einem oder mehreren ein- oder mehrwertigen Alkoholen mit jeweils einem zahlenmittleren Molekulargewicht bis zu 500 g/mol und jeweils einer zahlenmittleren Funktionalität von 1,5 bis 6,
wobei die eingesetzte Gesamtmenge an den Estergruppen aufweisenden Kondensationsprodukten im Faserverbundbauteil 5 bis 5,7 Gew.-% beträgt und wobei die Reaktionsmischung bei 25 °C direkt nach der Vermischung eine Viskosität von 200 bis 700 mPas, bevorzugt 200 bis 600 mPas, besonders bevorzugt 200 bis 550 mPas (gemessen nach DIN EN ISO 1342) aufweist und das Verhältnis der Anzahl der NCO-Gruppen der Komponente A) zu der Anzahl der OH-Gruppen der Komponente B) 1:1 bis 1,15:1, bevorzugt 1,03:1 bis 1,08:1 ist.

Die erfindungsgemäßen faserverstärkten Faserverbundbauteile sind kompakt und besitzen eine hohe Glasübergangstemperatur.

Die Viskositäten werden nach DIN EN ISO 53019 (Platte/Platte) bestimmt ((d/dt = 60 1/s): d/dt = Scherrate).

Der Faseranteil im Faserverbundbauteil beträgt vorzugsweise mehr als 45 Gew.-%, besonders bevorzugt mehr als 50 Gew.-%, bezogen auf das Gesamtgewicht des Faserverbundbauteils.

Der Faseranteil kann bei Glasfasern beispielsweise durch Veraschung bestimmt werden.

Die Faserverbundbauteile können weitere allgemein bekannte Schutz- und/oder Dekorschichten aufweisen. Diese können zum Beispiel vor dem Einbringen des Fasermaterials und der Reaktionsmischung in eine oder beide Werkzeughälften eines Werkzeugs eingetragen werden, wie beispielsweise eine oder mehrere Gelcoatschichten. So können Faserverbundbauteile aus einer oder mehreren mit Polyurethan getränkten Faserschichten und Schutz- und/oder Dekorschichten erhalten werden. Schutz- und/oder Dekorschichten können je nach den gewünschten Eigenschaften aus unterschiedlichen Materialien bestehen. Als Schutz- und/oder Dekorschicht können beispielsweise allgemein bekannte, insbesondere thermoplastische kompakte oder geschäumte Folien eingesetzt werden, wie z.B. Folien auf der Basis von Acrylnitril-Butadien-Styrol (ABS), Polymethylmethacrylat (PMMA), Acrylnitril-Styrol-Acrylester (ASA), Polycarbonat (PC), thermoplastischem Polyurethan, Polypropylen, Polyethylen, und/oder Polyvinylchlorid (PVC). Es können auch beschichtete oder lackierte Folien verwendet werden. Als Dekorschichten kommen darüber hinaus auch übliche Metallfolien in Betracht, wie z.B. Aluminiumfolie oder Stahlfolie. Weiterhin können flächige Textilstoffe, Papier, Holz (z.B. Furniere) oder auch Sprüh- oder RIM-Häute aus Polyurethan als Dekorschicht verwendet werden. Als Dekorschicht kann auch Glas verwendet werden. Die dekorative Oberflächenschicht kann auf einer der beiden Seiten des Faserverbundbauteils oder auf beiden Seiten aufgebracht sein.

Ein weiterer Gegenstand der Erfindung ist ein Verfahren zur Herstellung der erfindungsgemäßen Faserverbundbauteile, wobei
i) eine oder mehrere Faserschichten in einer oder beiden Werkzeughälften eines Werkzeugs vorgelegt werden,
ii) das Werkzeug geschlossen wird,
iii) ein Reaktionsgemisch bestehend aus
   A) einem oder mehreren organischen NCO-Prepolymeren mit einem NCO-Gehalt von 27 bis 31 Gew.-% und einem Monomergehalt von 35 bis 55 Gew.-% aus der Gruppe bestehend aus Reaktionsprodukten aus aliphatischen, cycloaliphatischen und/oder aromatischen Di- und/oder Polyisocyanaten und 5 bis 7,5 Gew.-%, bezogen auf Komponente A), Estergruppen aufweisenden Kondensationsprodukten mit jeweils einem zahlenmittleren Molekulargewicht von 650 bis 3000 g/mol, einer Säurezahl von unter 5, einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di und/oder Tricarbonsäuren mit jeweils zahlenmittleren Molekulargewichten von 50 bis 500 g/mol und/oder deren Derivaten und einem oder mehreren ein- oder mehrwertigen Alkoholen mit jeweils einem zahlenmittleren Molekulargewicht bis 500 g/mol und jeweils einer zahlenmittleren Funktionalität von 1,5 bis 6,
   B) einer Komponente enthaltend ein oder mehrere Polyole mit jeweils einem zahlenmittleren Molekulargewicht von 62 bis 3000 g/mol und jeweils einer zahlenmittleren Funktionalität von 1,8 bis 6
   C) zwei oder mehreren thermolatenten Katalysatoren
   D) gegebenenfalls Additiven
   wobei die Komponente B) 2,5 bis 3,5 Gew.-%, bezogen auf Komponente B), internes Trennmittel enthält und das interne Trennmittel ausgewählt ist aus der Gruppe bestehend aus Estergruppen aufweisenden Kondensationsprodukten mit jeweils einem zahlenmittleren Molekulargewicht von 650 bis 3000 g/mol, einer Säurezahl von unter 5 und einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils einem zahlenmittleren Molekulargewicht von 50 bis 500 g/mol und/oder deren Derivaten und einem oder mehreren ein- oder mehrwertigen Alkoholen mit jeweils einem zahlenmittleren Molekulargewicht bis zu 500 g/mol und jeweils einer zahlenmittleren Funktionalität von 1,5 bis 6, und
   wobei die eingesetzte Gesamtmenge an den Estergruppen aufweisenden Kondensationsprodukten im Faserverbundbauteil 5 bis 5,7 Gew.-% beträgt und wobei die Reaktionsmischung bei 25 °C direkt nach der Vermischung eine Viskosität von 200 bis 700 mPas, bevorzugt 200 bis 600 mPas, besonders bevorzugt 200 bis 550 mPas (gemessen nach DIN EN ISO 1342) aufweist und das Verhältnis der Anzahl der NCO-Gruppen der Komponente A) zu der Anzahl der OH-Gruppen der Komponente B) 1:1 bis 1,15:1, bevorzugt 1,03:1 bis 1,08:1 ist,
   in das geschlossene gegebenenfalls unter Vakuum stehende Werkzeug gegebenenfalls unter Druck eingebracht wird, wodurch die eine oder mehrere Faserschichten getränkt werden, und
iv) das Reaktionsgemisch aus iii) bei einer Temperatur von 50 °C bis 120 °C, bevorzugt von 70 °C bis 100 °C, ausgehärtet wird.

Vor einer ersten Bauteilfertigung können die Werkzeughälften zunächst mit einem Wachs behandelt und anschließend mit einem zusätzlichen externen Trennmittel versehen werden, bevor das Fasermaterial und die Reaktionsmischung eingebracht werden.

Die erfindungsgemäßen Faserverbundbauteile können auch mit allgemein bekannten Verfahren hergestellt werden, wie z.B. Handlaminieren (Nasspressverfahren), Filament Winding, Spritzpressen, Formpressen (SMC = Sheet molding compound oder BMC = Bulk molding compound) Harzinjektionsverfahren (=Resin Transfer Moulding) oder vakuumunterstützte Infusionsverfahren (beispielsweise VARTM (Vacuum Assisted Resin Transfer Moulding)) oder die Prepregtechnologie. Besonders bevorzugt und beansprucht ist das High Pressure Resin Transfer Molding (HP-RTM) Verfahren.

Gemäß dem für die Herstellung der erfindungsgemäßen Faserverbundbauteile bevorzugten HP-RTM-Verfahren wird nach dem Einlegen der einen oder mehreren Faserschichten in die Werkzeughälfte mit einem Werkzeuggegenstück die Form geschlossen, eventuell Vakuum in der Werkzeugform erzeugt und anschließend die Reaktionsmischung unter Druck eingetragen. Falls erforderlich können zwischen den Werkzeughälften und dem Fasermaterial noch sogenannte Fließhilfen (z.B. in Form von druckstabilen, aber harzdurchlässigen Matten) eingebracht werden, die nach der Aushärtung wieder entfernt werden können.

Die erfindungsgemäß eingesetzten Reaktionsmischungen haben niedrige Viskositäten, lange Verarbeitungszeiten und weisen kurze Aushärtezeiten bei niedrigen Aushärtetemperaturen auf und ermöglichen so die schnelle Fertigung von Faserverbundbauteilen. Darüber hinaus ist die Fertigung von vielen Bauteilen direkt nacheinander ohne weiteres Eintrennen der Werkzeughälften mit einem externen Trennmittel möglich und erhöht somit die Produktivität. Auch eine aufwändige Nachbehandlung der Faserverbundbauteile z.B. durch Tempern oder eine Oberflächenreinigung für eine sich gegebenenfalls anschließende Lackierung/Kaschierung ist nicht notwendig und spart dadurch Zeit und Kosten.

Die erfindungsgemäß eingesetzten Reaktionsmischungen sind anfangs beim Einfüllen dünnflüssig, bleiben für die Zeit der Tränkung der Faserschichten dünnflüssig und härten danach schnell aus. Dies ist besonders bei großen Bauteilen vorteilhaft. Die Viskosität der erfindungsgemäßen Reaktionsmischungen liegt bei 25°C direkt nach dem Vermischen bei einem Wert von 200 bis 700 mPas, bevorzugt bei einem Wert von 200 bis 600 mPas. Die Viskosität der erfindungsgemäßen Reaktionsmischungen steigt bei Temperaturen von 50 bis 120 °C sehr schnell an (sogenanntes "snap-cure").

Als Polyisocyanatkomponente A) kommen Prepolymere aus üblichen aliphatischen, cycloaliphatischen, insbesondere aromatischen Di- und/oder Polyisocyanaten zum Einsatz. Beispiele geeigneter Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die Isomeren des Bis(-isocyanatocyclohexyl)methans oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet.

Die Komponente A) hat einen Gehalt an Estergruppen aufweisenden Kondensationsprodukten von 5 bis 7,5 Gew.-% und einen Monomergehalt von zwischen 35 und 55 Gew.-%, bevorzugt zwischen 40 und 50 Gew.-%, besonders bevorzugt zwischen 43 und 49 Gew.-%. Der NCO-Gehalt der verwendeten Prepolymere liegt bei 27 bis 31 Gew.-%, bevorzugt über 28 Gew.-%,. Der NCO-Gehalt kann nach DIN 53185 bestimmt werden. Die Viskosität des Prepolymers sollte vorzugsweise bei 30 bis ≤ 250 mPas (bei 20°C), bevorzugt ≤ 200 mPas (bei 20°C) und besonders bevorzugt von ≤ 170 mPas (bei 20°C) sein.

Die Polyole der Komponente B) weisen zahlenmittlere Molekulargewichte Mₙ von ≥ 62 g/mol bis ≤ 3000 g/mol. Die Komponente B) enthält vorzugsweise als Polyole solche, die eine zahlenmittlere OH-Zahl von 28 bis 2000 mg KOH/g, bevorzugt von 40 bis 1900 mg KOH/g aufweisen. Die OH-Zahl der Komponente B) gibt im Falle eines einzelnen zugesetzten Polyols dessen OH-Zahl an. Im Falle von Mischungen wird die zahlenmittlere OH-Zahl angegeben. Der Wert der OH-Zahl kann anhand von DIN 53240 bestimmt werden. Die Viskosität der Polyole beträgt vorzugsweise 40 bis ≤ 700 mPas (bei 25°C). Die Komponente B) besitzt in der Mischung vorzugsweise mindestens 70 % sekundäre OH-Gruppen, bevorzugt mindestens 80 % sekundäre OH-Gruppen und besonders bevorzugt mindestens 85 % sekundäre OH-Gruppen. Polyetherpolyole auf Basis Propylenoxid sind besonders bevorzugt. Bevorzugt haben die eingesetzten Polyole eine mittlere Funktionalität von 1,8 bis 6,0, besonders bevorzugt 1,8 bis 4,0.

Erfindungsgemäß können Polyetherpolyole, Polyesterpolyole oder Polycarbonatpolyole eingesetzt werden. Geeignete Polyetherpolyole sind Additionsprodukte von Styroloxid, Ethylenoxid, Propylenoxid und/oder Butylenoxid an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle. Es können auch Gemische aus Polyetherpolyolen und Polyesterpolyolen, besonders bevorzugt Estergruppen aufweisenden Kondensationsprodukten eingesetzt werden.

Die Herstellung der internen Trennmittel aus den beispielhaft genannten Ausgangsmaterialien erfolgt durch an sich bekannte Veresterungsreaktionen, beispielsweise durch Erhitzen der Ausgangsmaterialien in Gegenwart von katalytischen Mengen einer Lewis- oder Brönsted-Säure wie z.B. Schwefelsäure, p-Toluolsulfonsäure, Zinndichlorid oder Titantetrabutylat bei einem Druck von ca. 1000 bis 0,1 mbar auf Temperaturen von bis zu 220°C, vorzugsweise bis zu 180°C unter gleichzeitiger Entfernung des bei der Kondensationsreaktion entstehenden Wassers.

Als thermolatente Katalysatoren C) werden bevorzugt Katalysatoren eingesetzt, die im Bereich zwischen 50°C und 120°C katalytisch aktiv sind. Typische thermolatente Katalysatoren sind beispielsweise blockierte Amin- und Amidin-Katalysatoren der Hersteller Air Products (wie z.B. Polycat® SA-1/10 (Phenol-blockiertes 1,8-Diazabicyclo[5.4.0]undec-7-en (=DBU)), Polycat® SA 102/10, Dabco KTM 60, DABCO® 8154 (Ameisensäure-blockiertes Triethylendiamin) oder DABCO® WT) und Tosoh Corporation (wie z.B. Toyocat® DB 2, DB 30, DB 31, DB 40, DB 41, DB 42, DB 60, DB 70) und Huntsman Corporation (wie z.B. Accelerator DY 9577). Besonders bevorzugt ist eine Kombination aus Polycat® SA1/10 und Toyocat® DB 40 im Verhältnis 1:5 Gew.-%. Es können aber auch alle weiteren, typischen thermolatenten Katalysatoren aus der Polyurethanchemie mit einer sogenannten Schalttemperatur von 50°C bis 120°C eingesetzt werden. Ganz besonders vorteilhaft ist der Einsatz von mindestens zwei thermolatenten Katalysatoren mit unterschiedlichen Schalttemperaturen.

Als thermolatente Katalysatoren C) können die bekannten Katalysatoren, meist Basen (tertiäre Amine, Salze schwacher Säuren wie Kaliumacetat) und organische Metallverbindungen eingesetzt werden. Bevorzugte thermolatent-reaktive Katalysatoren sind Salze von tertiären Aminen. Diese thermolatent-reaktiven Katalysatoren lassen sich beispielsweise durch chemische Blockierung eines katalytisch aktiven Amins erhalten. Die chemische Blockierung kann durch die Protonierung eines tertiären Amins mit einer Säure wie zum Beispiel Ameisensäure, Essigsäure, Ethylhexansäure oder Ölsäure oder eines Phenols oder durch Bortrichlorid erfolgen. Trialkylamine und heterozyklische Amine können als Amin verwendet werden, beispielsweise Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Dimethyloctylamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Pentamethyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1 -Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan.

Gegebenenfalls können Additive D) zugesetzt werden. Hierbei handelt es sich beispielsweise um zusätzliche Katalysatoren, Entlüfter, Entschäumer, Inhibitoren, Füllstoffe und Verstärkungsstoffe. Weitere bekannte Additive und Zusatzmittel können bei Bedarf verwendet werden.

Zur Verbesserung der Brandbeständigkeit können der Matrix zudem Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht-flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

Als Fasermaterial für die Faserschichten können beispielsweise geschlichtete oder ungeschlichtete Fasern, beispielsweise Glasfasern, Kohlefasern, Stahl- bzw. Eisenfasern, Naturfasern, Aramidfasern, Polyethylenfasern, Basaltfasern oder Carbon Nanotubes (CNTs) eingesetzt werden.

Besonders bevorzugt sind Glasfasern und Kohlefasern. Die Fasern können Längen von 0,4 bis 5000 mm, bevorzugt 0,4 bis 3000 mm aufweisen. Es können auch sogenannte Kurzfasern mit einer Länge von 0,4 bis 50 mm verwendet werden. Endlosfaserverstärkte Verbundbauteile können durch den Einsatz von kontinuierlichen Fasern hergestellt werden. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt werden Faser-Halbzeuge als Fasermaterial, wie beispielsweise Gewebe, Gelege, Geflechte, Matten, Vliese, Gestricke und Gewirke oder 3D-Faser-Halbzeuge, eingesetzt.

Die erfindungsgemäßen Faserverbundbauteile können zur Herstellung von Karosseriebauteilen von Automobilen oder im Flugzeugbau, zur Herstellung von Rotorblättern von Windkraftanlagen, in Bauteilen des Gebäude- bzw. Straßenbaus und sonstigen hochbelasteten Strukturen verwendet werden.

Die Erfindung soll anhand der nachfolgenden Beispiele näher erläutert werden.

### Beispiele

### Normen und verwendete Messgeräte:

DSC: Messgerät DSC Q 20 V24.8 Build 120 der Fa. Texas Instruments
Viskosität gemäß DIN EN ISO 53019 (d/dt = 60 1/s): d/dt = Scherrate (Viskosimeter: MCR 501 der Fa. Anton Paar)
DIN EN ISO 53765-A-20: A-20 = Bestimmung des Glasübergangspunktes mit einer Temperaturänderung von 20 Kelvin/Sekunde

### Allgemeine Vorschrift zur Herstellung von Polyurethanplatten

Um die Matrix(Polyurethan)eigenschaften zu bestimmen wurden Formkörper (Platten) aus erfindungsgemäßen Polyurethansystemen hergestellt und mit nicht-erfindungsgemäßen Systemen verglichen. Die Polyolmischung, die sowohl ein internes Trennmittel, als auch die thermolatenten Katalysatoren enthielt, und die Isocyanatkomponente A) wurden bei einem Druck von 1 mbar für 20 Minuten entgast. 90 g der hergestellten Polyolmischung wird zusätzlich zur Beobachtung der Phasenstabilität in eine Glasflasche abgefüllt. Die Verarbeitung der Reaktionsmischung erfolgte durch Reaktionsspritzgusstechnik. Die Polyol- und die Isocyanat-Komponente wurden mittels eines Hochdruckdosiergerätes nach intensiver Vermischung in einem zwangsgesteuerten Mischkopf in ein zuvor gereinigtes, mit externem Trennmittel einmalig behandeltes und geheiztes Plattenwerkzeug mit einer Formtemperatur von 80 °C und den Abmessungen 300 x 200 x 4 mm über einen Staubalkenanguss gedrückt. Die Polyoltemperatur betrug 48 °C, die Isocyanattemperatur betrug 80 °C. Die Platten konnten nach 5 Minuten aus der Form entnommen werden.

Zusätzlich wurden die Gelzeit des homogenisierten Reaktionsgemisches aus Polyolmischung und Isocyanatmischung am Geltimer (75g) und die Verfestigungszeit bei 80 °C bestimmt.

Die Mengenangaben und Eigenschaften sind der Tabelle zu entnehmen.

Aus den Platten wurden Probenkörper für einen Zugversuch nach DIN EN ISO 527 hergestellt und der E-Modul, die Festigkeit und die Bruchdehnung bestimmt.

Es wurde sowohl die Viskosität des Polyolgemisches, als auch die Viskosität des Reaktionsgemisches direkt nach dem Vermischen der Komponenten mit einem Rotationsviskosimeter bei 25°C mit einer Scherrate von 60 1/s nach DIN EN ISO 1342 bestimmt.

Die Glasübergangstemperatur wurde mittels DSC-Analyse bestimmt (Messgerät DSC Q 20 V24.8 Build 120 der Fa. Texas Instruments).

Der NCO-Umsatz wurde mittels FTIR-Spektroskopie bestimmt (Messgerät Bruker Optik GmbH, Tensor 27).

Die Oberflächenspannung wurde mit Hilfe einer Testtinte nach DIN ISO 8296 bestimmt.

Unter dem NCO/OH-Index wird im Rahmen dieser Patentanmeldung die Kennzahl verstanden, die das molare Verhältnis von eingesetzten NCO-Gruppen zu eingesetzten NCO-reaktiven H-Atomen beschreibt. Eine äquivalente Menge an NCO-Gruppen und NCO-reaktiven H-Atomen entspricht dabei einem NCO/OH-Index von 1.

Für die Herstellung der faserverstärkten Verbundbauteile im High Pressure (HP)-RTM-Verfahren wurde ein Glasfasergewebe (G430BX-1270, Biaxial-Glasgelege 430 g/m² der Fa. HACOTECH) in eine Hälfte der Werkzeugform eingelegt, so dass ein Glasfasergehalt von ca. 50 Gewichts-%, bezogen auf das spätere Bauteil, erreicht wurde. Zuvor wurde die Werkzeugform gründlich gereinigt, mit einem Wachs Ewomold 5716 (der Fa KVS) behandelt und einmalig mit dem externen Trennmittel Acmos 36-4570 (der Fa Acmos Chemie) eingetrennt. In die anschließend verschlossene, auf 80 °C geheizte Form wurde dann die Reaktionsmischung unter Druck in die Form gedrückt und das fertige Faserverbundbauteil nach 5 Minuten entformt. Es konnten mehr als 20 Formteile ohne erneutes Eintrennen der Form hergestellt und entnommen werden.

An den faserverstärkten Probenkörpern wurden die mechanischen Messungen vorgenommen. Der Glasfasergehalt wurde durch Veraschung der Probenkörper nach DIN EN ISO 1172 bestimmt. Der E-Modul, die Festigkeit und die Bruchdehnung wurden nach DIN EN ISO 527 bestimmt.

### Beispiel 1: Herstellung von faserverstärkten Polyurethanplatten

63,2 g eines Polyetherpolyols mit einer OH-Zahl von 400 mg KOH/g und einer Funktionalität von 3 (Viskosität bei 25 °C: 370 ± 30 mPas; Glycerin als Starter; Propylenoxidbasis), 22,0 g eines Polyetherpolyols mit einer OH-Zahl von 515 mg KOH/g und einer Funktionalität von 2 (Viskosität bei 25 °C: 60 ± 20 mPas; 1,2-Propylenglycol als Starter; Propylenoxidbasis) und 10 g Glycerin (OH-Zahl von 1827 mg KOH/g und einer Funktionalität von 3, Viskosität bei 25 °C: 1480 ± 50 mPas) wurden mit 3 g eines Polyesterpolyols mit einer OH-Zahl von 52 mg KOH/g einer Säurezahl von 2 mg KOH/g und einer Funktionalität von 1,3 (internes Trennmittel bestehend aus Ölsäure, Adipinsäure und Pentaerythrit, Viskosität bei 25 °C: 500 mPas) und mit 0,05 g Polycat SA1/10 (thermolatenter Katalysator der Firma Air Products. Phenolsalz von 1,8-Diazabicyclo[5.4.0]undec-7-en in Dipropylenglykol) sowie mit 0,25 g Toyocat DB40 (thermolatenter Katalysator (blockiertes Amin) der Firma TOSOH Corporation) vermischt und für 20 Minuten bei einem Druck von 1 mbar entgast. Danach wurden 149,1 g Desmodur® 44P01 (Polyisocyanat der Firma Bayer MaterialScience AG; (f=2,68; NCO-Gehalt 29,15 Gew.-%; Viskosität bei 20 °C: 135 mPas) zur Polyolformulierung zugegeben und mit der Reaktionsmischung ein faserverstärktes Bauteil hergestellt.

### Vergleichsbeispiel 2: Herstellung von faserverstärkten Polyurethanplatten (ohne internes Trennmittel)

63,2 g eines Polyetherpolyols mit einer OH-Zahl von 400 mg KOH/g und einer Funktionalität von 3 (Viskosität bei 25 °C: 370 ± 30 mPas; Glycerin als Starter; Propylenoxidbasis), 22,0 g eines Polyetherpolyols mit einer OH-Zahl von 515 mg KOH/g und einer Funktionalität von 2 (Viskosität bei 25 °C: 60 ± 20 mPas; 1,2-Propylenglycol als Starter; Propylenoxidbasis) und 10 g Glycerin (OH-Zahl von 1827 mg KOH/g und einer Funktionalität von 3, Viskosität bei 25 °C: 1480 ± 50 mPas) wurden mit 0,05 g Polycat SA1/10 (latenter Katalysator der Firma Air Products. Phenolsalz von 1,8-Diazabicyclo[5.4.0]undec-7-en in Dipropylenglykol) und 0,25 g Toyocat DB40 (latenter Katalysator (blockiertes Amin) der Firma TOSOH Corporation) vermischt und für 20 Minuten bei einem Druck von 1 mbar entgast. Danach wurden 147,8 g Desmodur® 44P01 (Polyisocyanat der Firma Bayer MaterialScience AG; (f=2,68; NCO-Gehalt 29,15 Gew.-%; Viskosität bei 20 °C: 135 mPas) zur Polyolformulierung zugegeben und mit der Reaktionsmischung ein faserverstärktes Bauteil im HP-RTM-Verfahren hergestellt.

### Vergleichsbeispiel 3: Herstellung von faserverstärkten Polyurethanplatten (zu viel internes Trennmittel)

63,2 g eines Polyetherpolyols mit einer OH-Zahl von 400 mg KOH/g und einer Funktionalität von 3 (Viskosität bei 25 °C: 370 ± 30 mPas; Glycerin als Starter; Propylenoxidbasis), 22,0 g eines Polyetherpolyols mit einer OH-Zahl von 515 mg KOH/g und einer Funktionalität von 2 (Viskosität bei 25 °C: 60 ± 20 mPas; 1,2-Propylenglycol als Starter; Propylenoxidbasis) und 10 g Glycerin (OH-Zahl von 1827 mg KOH/g und einer Funktionalität von 3, Viskosität bei 25 °C: 1480 ± 50 mPas) wurden mit 5 g eines Polyesterpolyols mit einer OH-Zahl von 52 mg KOH/g einer Säurezahl von 2 mg KOH/g und einer Funktionalität von 1,3 als internes Trennmittel bestehend aus Ölsäure, Adipinsäure und Pentaerythrit, Viskosität bei 25 °C: 500 mPas und mit 0,05 g Polycat SA1/10 (thermolatenter Katalysator der Firma Air Products. Phenolsalz von 1,8-Diazabicyclo[5.4.0]undec-7-en in Dipropylenglykol) sowie mit 0,25 g Toyocat DB40 (thermolatenter Katalysator (blockiertes Amin) der Firma TOSOH Corporation) vermischt und für 20 Minuten bei einem Druck von 1 mbar entgast. Danach wurden 148,5 g Desmodur® 44P01 (Polyisocyanat der Firma Bayer MaterialScience AG; (f=2,68; NCO-Gehalt 29,15 Gew.-%; Viskosität bei 20 °C: 135 mPas) zur Polyolformulierung zugegeben und mit der Reaktionsmischung ein faserverstärktes Bauteil hergestellt.

### Vergleichsbeispiel 4: Herstellung von faserverstärkten Polyurethanplatten (Polyisocyanurat)

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Danach wurde mit der Reaktionsmischung ein faserverstärktes Bauteil hergestellt.

### Vergleichsbeispiel 5: Herstellung von faserverstärkten Polyurethanplatten (mit internem Trennmittel und einem thermolatenten Katalysator)

63,2 g eines Polyetherpolyols mit einer OH-Zahl von 400 mg KOH/g und einer Funktionalität von 3 (Viskosität bei 25 °C: 370 ± 30 mPas; Glycerin als Starter; Propylenoxidbasis), 22,0 g eines Polyetherpolyols mit einer OH-Zahl von 515 mg KOH/g und einer Funktionalität von 2 (Viskosität bei 25 °C: 60 ± 20 mPas; 1,2-Propylenglycol als Starter; Propylenoxidbasis) und 10 g Glycerin (OH-Zahl von 1827 mg KOH/g und einer Funktionalität von 3, Viskosität bei 25 °C: 1480 ± 50 mPas) wurden mit 3 g eines Polyesterpolyols mit einer OH-Zahl von 52 mg KOH/g einer Säurezahl von 2 mg KOH/g und einer Funktionalität von 1,3 (internes Trennmittel bestehend aus Ölsäure, Adipinsäure und Pentaerythrit, Viskosität bei 25 °C: 500 mPas) und mit 0,40 g Toyocat DB40 (latenter Katalysator (blockiertes Amin) der Firma TOSOH Corporation) vermischt und für 20 Minuten bei einem Druck von 1 mbar entgast. Danach wurden 149,1 g Desmodur® 44P01 (Polyisocyanat der Firma Bayer MaterialScience AG; (f=2,68; NCO-Gehalt 29,15 Gew.-%; Viskosität bei 20 °C: 135 mPas; Prepolymer mit internem Trennmitel;) zur Polyolformulierung zugegeben und mit der Reaktionsmischung ein faserverstärktes Bauteil hergestellt.

**Tabelle:**

| | **Beispiel 1** | **Vergleichsbeispiel 2** | **Vergleichsbeispiel 3** | **Vergleichsbeispiel 4** | **Vergleichsbeispiel 5** |
|---|---|---|---|---|---|
| NCO/OH Äquivalentverhältnis | 1,05 | 1,05 | 1,05 | 12,4 | 1,05 |
| Viskosität der Polyolformulierung bei 25 °C [mPas] | 326 | 350 | 320 | 360 | 323 |
| Viskosität des Reaktionsgemisches bei 25 °C (direkt nach dem Vermischen) [mPas] | 532 | 509 | 491 | 320 | 560 |
| Viskosität bei 25 °C (60 min nach dem Vermischen) [mPas] | fest | fest | fest | 320 | fest |
| Topfzeit bei 25 °C | 14 min 45 sek | 13 min 35 sek | 12 min 55 sek | >24 Std. | 14 min 15 sek |
| Verfestigungszeit bei 80 °C [sek] | 66 | 64 | 75 | 7800 | 75 |
| Gew.-Teile an internem Trennmittel auf der Polyolseite | 3 | 0 | 5 | 0 | 3 |
| Gew.-Teile an Estergruppen aufweisendes Kondensationsprodukt im Prepolymer | 6,85 | 6,85 | 6,85 | 0 | 6,85 |
| Gesamter Anteil an IMR im fertigen Bauteil [%] | 5,33 | 4,16 | 6,09 | 0 | 5,33 |
| Phasenstabilität des Polyols nach 60 Minuten | stabil | stabil | instabil | stabil | stabil |
| Entformungen ohne erneutes Eintrennen der Form | >20 Formteile | 1 Formteil | >20 Formteile | 1 Formteil | <20 Formteile |
| Entformzeit [min] | 5 min (80 °C) | 5 min (80 °C) | 5 min (80 °C) | 15(130 °C) | 8 min (80 °C) |
| NCO-Umsatz direkt nach Entformung (ohne Temperung) | 93,4% | 92,6% | 93,1% | 75% | 90% |
| Oberflächenspannung [mN/m] | 34 | 34 | 29 | 35 | 34 |
| Glasübergangstemperatur T_{g}[°C] nach DIN EN ISO 53765 | 110 | 98 | 99 | 146 | 90 |
| E-Modul nach DIN ISO 527 (Reinharzplatten) [MPa] | 2850 | 2820 | 2635 | 2300 | 2500 |
| Zugfestigkeit [MPa] DIN ISO 527 (Reinharzplatten) | 71 | 78,4 | 68,8 | 94 | 68,5 |
| Bruchdehnung [%] DIN ISO 527 (Reinharzplatten) | 4,9 | 5,3 | 5,1 | 5,4 | 5,7 |
| Glasfasergehalt nach DIN EN ISO 1172 [Gew.-%] (Faserverbundbauteil) | 55 | 54 | 54 | 50 | 55 |
| E-Modul nach DIN ISO 527 (Faserverbundbauteil) [MPa] | 23815 | 23419 | 21625 | 23950 | 23676 |
| Zugfestigkeit [MPa] nach ISO 527 (Faserverbundbauteil) | 445 | 425 | 324 | 297 | 462 |
| Zugdehnung [%] nach ISO 527 (Faserverbundbauteil) | 2,2 | 2,5 | 3,4 | 1,5 | 2,5 |

Das erfindungsgemäße Beispiel 1 ergab eine kompakte Polyurethanplatte, welche sehr gute mechanische Eigenschaften (E-Modul von 2850 MPa, Zugfestigkeit von 71 Mpa und einer Bruchdehnung von 4,9%) besitzt. Zudem besitzt das erfindungsgemäß eingesetzte Polyurethan (Matrixsystem) eine hohe Glasübergangstemperatur von 110 °C. Für die Herstellung von faserverstärkten Verbundbauteilen ist vor allem eine sehr niedrige Viskosität nötig, da dadurch das Fasergelege bzw. Gewebe leichter und besser getränkt bzw. imprägniert wird, und die Formen deutlich schneller und gleichmäßiger gefüllt werden können. Dies ermöglicht zudem kürzere Zykluszeiten, da die Formen nur für kurze Zeit belegt werden. Allerdings wird insbesondere für große Faserverbundbauteile eine lange Topfzeit gewünscht. Im erfindungsgemäßen Beispiel 1 beträgt die Topfzeit bei Raumtemperatur 14 Minuten und 45 Sekunden. Die Polyolfomulierung des erfindungsgemäß eingesetzten Polyurethansystems ist phasenstabil, d.h. es findet trotz des vorhandenen interne Trennmittels auch nach längerer Standzeit/Lagerung bei Raumtemperatur keine Phasentrennung statt. Vorteilhaft sind zudem die mehr als 20 Entformungen der Polyurethanplatten nach nur einer kurzen Aushärtezeit von weniger als 5 Minuten bei einer niedrigen Aushärtetemperatur von 80 °C. Die Oberflächenspannung liegt mit 34 mN/m sehr hoch, so dass die Bauteile direkt nach dem Entformen ohne weitere Nachbehandlung, wie zum Beispiel durch Lagern, Sandstrahlen o.ä., lackiert werden können. Dies führt zu einer deutlichen Zeit- und Kostenersparnis bei der Herstellung von Faserverbundbauteilen im industriellen Maßstab. Ein Nachtempern der erfindungsgemäßen Polyurethanplatte war nicht nötig, da der NCO-Umsatz mit 93,4% im Vergleich zum Vergleichsbeispiel 4 (Polyiisocyanuratbauteil, 75% NCO-Umsatz) bereits sehr hoch ist. Das hergestellte erfindungsgemäße kompakte Faserverbundbauteil besitzt sehr gute mechanische Eigenschaften: E-Modul von 23815 MPa, Zugfestigkeit von 445 MPa und Biegedehnung von 2,2%.

Im Vergleichsbeispiel 2 wurde das interne Trennmittel auf der Polyolseite komplett herausgelassen. Die Viskositäten der Polyolfomulierung und des Reaktionsgemisches waren sehr ähnlich denen aus dem erfindungsgemäßen Beispiel 1. Auch die mechanischen Eigenschaften sowohl der Polyurethanplatte als auch der Faserverbundbauteile lagen in einem ähnlichen Bereich. Allerdings wurde durch das Weglassen des internen Trennmittels die Anzahl der entformbaren Platten deutlich reduziert, so dass im Vergleichsbeispiel 2 nach jeder Platte die Form erneut mit dem externen Trennmittel eingetrennt werden musste. Dies führte zu einem deutlich höherem Zeitaufwand bei der Fertigung der Faserverbundbauteile. Die mechanischen Eigenschaften sowohl der Reinharzplatten als auch der Faserverbundbauteile sind ähnlich dem erfindungsgemäßen Beispiel 1. Lediglich die Glasübergangstemperatur ist im Vergleichsbeispiel mit 98 °C deutlich niedriger als im erfindungsgemäßen Beispiel 1.

Im Vergleichsbeispiel 3 wurde der Gehalt an internem Trennmittel auf der Polyolseite von 3 auf 5 Gewichtsteile erhöht. Die Viskositäten liegen zwar ebenfalls in einem ähnlichen Bereich zu denen im erfindungsgemäßen Beispiel 1, allerdings fand aufgrund des erhöhten Anteils an internem Trennmittel direkt nach der Herstellung der Polyolformulierung eine Phasenseparation statt. Aufgrund dieser Phasenseparation ist war eine kontinuierliche Verarbeitung nicht möglich. Zudem besitzen die Formteile nach ihrer Herstellung eine Oberflächenspannung von 29mN/m, so dass diese Bauteile ohne weitere Nachbehandlung eine deutlich schlechtere Lackhaftung besitzen als die Bauteile aus dem erfindungsgemäßen Beispiel 1. Auch der E-Modul der Reinharzplatte und des Faserverbundbauteils des Vergleichsbeispiels 3 liegen mit 2635 MPa und 21625 deutlich unter den Werten aus dem erfindungsgemäßen Beispiel 1.

Der Gehalt an internem Trennmittel auf der Polyolseite wurde in den Vergleichsbeispielen 2 und 3 variiert. Die gemessenen Daten zeigen deutlich, dass eine phasenstabile Polyolkomponente und eine hohe Oberflächenspannung nur in einem engen Mengenbereich an Estergruppen aufweisenden Kondensationsprodukten im fertigen Bauteil erhalten werden können.

Das Vergleichsbeispiel 4 beschreibt ein Polyisocyanuratbauteil, welches im HP-RTM-Verfahren hergestellt wurde. Im Vergleichsbeispiel 4 wurde eine sehr viel höhere Formtemperatur von 130 °C benötigt. Die Entformungszeit ist bei dieser Temperatur mit 15 Minuten dreimal so lang wie im erfindungsgemäßen Beispiel 1. Das entformte Bauteil weist einen sehr viel niedrigeren NCO-Umsatz von 75 % auf. Die Bauteile auf Polyisocyanuratbasis mussten für einige Stunden nachgetempert werden. Dies stellt einen sehr zeit- und kostenintensiven Schritt dar, den es zu verweiden gilt. Zudem liegt der E-Modul der Reinharzplatte mit 2300 MPa deutlich unter denen aus dem erfindungsgemäßen Beispiel 1.

Im Vergleichsbeispiel 5 wurde einer der beiden latenten Katalysatoren, Polycat SA1/10, herausgelassen und der Anteil am zweiten latenten Katalysator, Toyocat DB40, äquimolar erhöht. Die Verfestigungszeit erhöht sich von 66 Sekunden (erfindungsgemäßes Beispiel 1) auf 75 Sekunden (Vergleichsbeispiel 5). Zusätzlich können weniger als 20 Formteile ohne erneutes Eintrennen der Form entformt werden. Die Entformzeit bei 80 °C steigt deutlich auf 8 Minuten an. Sowohl die Glasübergangstemperatur (90 °C) als auch der E-Modul der Reinharzplatte (2500 MPa) sind deutlich niedriger im Vergleich zum erfindungsgemäßen System aus Beispiel 1.

Die sehr guten mechanischen Kennwerte, die gute Phasenstabilität im Polyol, die hohe Oberflächenspannung und der hohe NCO-Umsatz in Kombination mit einer sehr niedrigen Anfangsviskosität von 532 mPas bei 25 °C und somit einer guten Faserbenetzung während der Bauteilproduktion führen zu einer hohen Produktivität bei der Herstellung von faserverstärkten Bauteilen und wurden nur im erfindungsgemäßen Beispiel erreicht.

## Patentansprüche

1. Faserverbundbauteile auf Polyurethanbasis enthaltend eine oder mehrere Faserschichten, die jeweils mit Polyurethan getränkt sind, wobei das Polyurethan erhältlich ist aus einem Reaktionsgemisch bestehend aus
A) einem oder mehreren organischen NCO-Prepolymeren mit einem NCO-Gehalt von 27 bis 31 Gew.-% und einem Monomergehalt von 35 bis 55 Gew.-% aus der Gruppe bestehend aus Reaktionsprodukten aus aliphatischen, cycloaliphatischen und/oder aromatischen Di- und/oder Polyisocyanaten und 5 bis 7,5 Gew.-%, bezogen auf Komponente A), Estergruppen aufweisenden Kondensationsprodukten mit jeweils einem zahlenmittleren Molekulargewicht von 650 bis 3000 g/mol, einer Säurezahl von unter 5, einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di und/oder Tricarbonsäuren mit jeweils zahlenmittleren Molekulargewichten von 50 bis 500 g/mol und/oder deren Derivaten und einem oder mehreren ein- oder mehrwertigen Alkoholen mit jeweils einem zahlenmittleren Molekulargewicht bis 500 g/mol und jeweils einer zahlenmittleren Funktionalität von 1,5 bis 6
B) einer Komponente enthaltend ein oder mehrere Polyole mit jeweils einem zahlenmittleren Molekulargewicht von 62 bis 3000 g/mol und jeweils einer zahlenmittleren Funktionalität von 1,8 bis 6
C) zwei oder mehreren thermolatenten Katalysatoren und
D) gegebenenfalls Additiven,
**dadurch gekennzeichnet, dass** die Komponente B) 2,5 bis 3,5 Gew.-%, bezogen auf Komponente B), internes Trennmittel enthält und das interne Trennmittel ausgewählt ist aus der Gruppe bestehend aus Estergruppen aufweisenden Kondensationsprodukten mit jeweils einem zahlenmittleren Molekulargewicht von 650 bis 3000 g/mol, einer Säurezahl von unter 5 und einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils einem zahlenmittleren Molekulargewicht von 50 bis 500 g/mol und/oder deren Derivaten und einem oder mehreren ein- oder mehrwertigen Alkoholen mit jeweils einem zahlenmittleren Molekulargewicht bis zu 500 g/mol und jeweils einer zahlenmittleren Funktionalität von 1,5 bis 6, wobei die eingesetzte Gesamtmenge an den Estergruppen aufweisenden Kondensationsprodukten im Faserverbundbauteil 5 bis 5,7 Gew.-% beträgt und wobei die Reaktionsmischung bei 25 °C eine Viskosität direkt nach der Vermischung von 200 bis 700 mPas (gemessen nach DIN EN ISO 1342) aufweist und das Verhältnis der Anzahl der NCO-Gruppen der Komponente A) zu der Anzahl der OH-Gruppen der Komponente B) 1:1 bis 1,15:1 ist.

2. Verfahren zur Herstellung der Faserverbundbauteile gemäß Anspruch 1, wobei
i) eine oder mehrere Faserschichten in einer oder beiden Werkzeughälften eines Werkzeugs vorgelegt werden,
ii) das Werkzeug geschlossen wird,
iii) ein Reaktionsgemisch bestehend aus
A) einem oder mehreren organischen NCO-Prepolymeren mit einem NCO-Gehalt von 27 bis 31 Gew.-% und einem Monomergehalt von 35 bis 55 Gew.-% aus der Gruppe bestehend aus Reaktionsprodukten aus aliphatischen, cycloaliphatischen und/oder aromatischen Di- und/oder Polyisocyanaten und 5 bis 7,5 Gew.-%, bezogen auf Komponente A), Estergruppen aufweisenden Kondensationsprodukten mit jeweils einem zahlenmittleren Molekulargewicht von 650 bis 3000 g/mol, einer Säurezahl von unter 5, einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils zahlenmittleren Molekulargewichten von 50 bis 500 g/mol und/oder deren Derivaten und einem oder mehreren ein- oder mehrwertigen Alkoholen mit jeweils einem zahlenmittleren Molekulargewicht bis 500 g/mol und jeweils einer zahlenmittleren Funktionalität von 1,5 bis 6,
B) einer Komponente enthaltend ein oder mehrere Polyole mit jeweils einem zahlenmittleren Molekulargewicht von 62 bis 3000 g/mol und jeweils einer zahlenmittleren Funktionalität von 1,8 bis 6
C) zwei oder mehreren thermolatenten Katalysatoren
D) gegebenenfalls Additiven
wobei die Komponente B) 2,5 bis 3,5 Gew.-%, bezogen auf Komponente B), internes Trennmittel enthält und das interne Trennmittel ausgewählt ist aus der Gruppe bestehend aus Estergruppen aufweisenden Kondensationsprodukten mit jeweils einem zahlenmittleren Molekulargewicht von 650 bis 3000 g/mol, einer Säurezahl von unter 5 und einer Hydroxylzahl von 28 bis 112 und jeweils einer zahlenmittleren Funktionalität von 1,0 bis 3,0 aus einer oder mehreren Fettsäuren mit 10 bis 30 Kohlenstoffatomen, einer oder mehreren niedermolekularen aliphatischen und/oder aromatischen Di- und/oder Tricarbonsäuren mit jeweils einem zahlenmittleren Molekulargewicht von 50 bis 500 g/mol und/oder deren Derivaten und einem oder mehreren ein- oder mehrwertigen Alkoholen mit jeweils einem zahlenmittleren Molekulargewicht bis zu 500 g/mol und jeweils einer zahlenmittleren Funktionalität von 1,5 bis 6, und
wobei die eingesetzte Gesamtmenge an den Estergruppen aufweisenden Kondensationsprodukten im Faserverbundbauteil 5 bis 5,7 Gew.-% beträgt und wobei die Reaktionsmischung bei 25 °C eine Viskosität direkt nach der Vermischung von 200 bis 700 mPas (gemessen nach DIN EN ISO 1342) aufweist und das Verhältnis der Anzahl der NCO-Gruppen der Komponente A) zu der Anzahl der OH-Gruppen der Komponente B) 1:1 bis 1,15:1 ist,
in das geschlossene gegebenenfalls unter Vakuum stehende Werkzeug gegebenenfalls unter Druck eingebracht wird, wodurch die eine oder mehrere Faserschichten getränkt werden, und
iv) das Reaktionsgemisch aus iii) bei einer Temperatur von 50 °C bis 120 °C, bevorzugt von 70 °C bis 100 °C, ausgehärtet wird.

## Claims

1. Fiber composite components based on polyurethane, comprising one or more fiber layers each impregnated with polyurethane, wherein the polyurethane is obtainable from a reaction mixture consisting of
A) one or more organic NCO prepolymers having an NCO content of 27% to 31% by weight and a monomer content of 35% to 55% by weight from the group consisting of reaction products of aliphatic, cycloaliphatic and/or aromatic di- and/or polyisocyanates and 5% to 7.5% by weight, based on component A), of condensation products which have ester groups, each have a number-average molecular weight of 650 to 3000 g/mol, an acid number of less than 5, a hydroxyl number of 28 to 112 and in each case a number-average functionality of 1.0 to 3.0, and are formed from one or more fatty acids having 10 to 30 carbon atoms, one or more low molecular weight aliphatic and/or aromatic di- and/or tricarboxylic acids each having number-average molecular weights of 50 to 500 g/mol and/or derivatives thereof and one or more mono- or polyhydric alcohols each having a number-average molecular weight up to 500 g/mol and each having a number-average functionality of 1.5 to 6,
B) a component comprising one or more polyols each having a number-average molecular weight of 62 to 3000 g/mol and each having a number-average functionality of 1.8 to 6,
C) two or more thermolatent catalysts and
D) optionally additives,
**characterized in that** component B) contains 2.5% to 3.5% by weight, based on component B), of internal mold release agent and the internal mold release agent is selected from the group consisting of condensation products which have ester groups, each have a number-average molecular weight of 650 to 3000 g/mol, an acid number of less than 5 and a hydroxyl number of 28 to 112 and each have a number-average functionality of 1.0 to 3.0, and are formed from one or more fatty acids having 10 to 30 carbon atoms, one or more low molecular weight aliphatic and/or aromatic di- and/or tricarboxylic acids each having a number-average molecular weight of 50 to 500 g/mol and/or derivatives thereof and one or more mono- or polyhydric alcohols each having a number-average molecular weight up to 500 g/mol and each having a number-average functionality of 1.5 to 6, wherein the total amount of the condensation products having ester groups used in the fiber composite component is 5% to 5.7% by weight and wherein the reaction mixture at 25°C has a viscosity directly after the mixing of 200 to 700 mPas (measured to DIN EN ISO 1342) and the ratio of the number of NCO groups of component A) to the number of OH groups of component B) is 1:1 to 1.15:1.

2. Process for producing the fiber composite components according to Claim 1, wherein
i) one or more fiber layers are initially charged in one or both halves of a mold,
ii) the mold is closed,
iii) a reaction mixture consisting of
A) one or more organic NCO prepolymers having an NCO content of 27% to 31% by weight and a monomer content of 35% to 55% by weight from the group consisting of reaction products of aliphatic, cycloaliphatic and/or aromatic di- and/or polyisocyanates and 5% to 7.5% by weight, based on component A), of condensation products which have ester groups, each have a number-average molecular weight of 650 to 3000 g/mol, an acid number of less than 5, a hydroxyl number of 28 to 112 and in each case a number-average functionality of 1.0 to 3.0, and are formed from one or more fatty acids having 10 to 30 carbon atoms, one or more low molecular weight aliphatic and/or aromatic di- and/or tricarboxylic acids each having number-average molecular weights of 50 to 500 g/mol and/or derivatives thereof and one or more mono- or polyhydric alcohols each having a number-average molecular weight up to 500 g/mol and each having a number-average functionality of 1.5 to 6,
B) a component comprising one or more polyols each having a number-average molecular weight of 62 to 3000 g/mol and each having a number-average functionality of 1.8 to 6,
C) two or more thermolatent catalysts,
D) optionally additives,
wherein component B) contains 2.5% to 3.5% by weight, based on component B), of internal mold release agent and the internal mold release agent is selected from the group consisting of condensation products which have ester groups, each have a number-average molecular weight of 650 to 3000 g/mol, an acid number of less than 5 and a hydroxyl number of 28 to 112 and each have a number-average functionality of 1.0 to 3.0, and are formed from one or more fatty acids having 10 to 30 carbon atoms, one or more low molecular weight aliphatic and/or aromatic di- and/or tricarboxylic acids each having a number-average molecular weight of 50 to 500 g/mol and/or derivatives thereof and one or more mono- or polyhydric alcohols each having a number-average molecular weight up to 500 g/mol and each having a number-average functionality of 1.5 to 6, and wherein the total amount of condensation products having ester groups used in the fiber composite component is 5% to 5.7% by weight and wherein the reaction mixture at 25°C has a viscosity directly after the mixing of 200 to 700 mPas (measured to DIN EN ISO 1342) and the ratio of the number of NCO groups of component A) to the number of OH groups of component B) is 1:1 to 1.15:1,
is introduced, optionally under pressure, into the closed mold which is optionally under reduced pressure, which results in impregnation of the one or more fiber layers, and
iv) the reaction mixture from iii) is cured at a temperature of 50°C to 120°C, preferably of 70°C to 100°C.

## Revendications

1. Composants composites fibreux à base de polyuréthane contenant une ou plusieurs couches de fibres, qui sont chacune imprégnées avec un polyuréthane, le polyuréthane pouvant être obtenu à partir d'un mélange réactionnel constitué par :
A) un ou plusieurs prépolymères de NCO organiques ayant une teneur en NCO de 27 à 31 % en poids et une teneur en monomères de 35 à 55 % en poids du groupe constitué par les produits de réaction de di- et/ou polyisocyanates aliphatiques, cycloaliphatiques et/ou aromatiques et 5 à 7,5 % en poids, par rapport au composant A), de produits de condensation comprenant des groupes ester ayant chacun un poids moléculaire moyen en nombre de 650 à 3 000 g/mol, un indice d'acidité de moins de 5, un indice hydroxyle de 28 à 112 et ayant chacun une fonctionnalité moyenne en nombre de 1,0 à 3,0, d'un ou de plusieurs acides gras contenant 10 à 30 atomes de carbone, d'un ou de plusieurs acides di- et/ou tricarboxyliques aliphatiques et/ou aromatiques de faible poids moléculaire, ayant chacun des poids moléculaires moyens en nombre de 50 à 500 g/mol, et/ou leurs dérivés, et d'un ou de plusieurs alcools mono- ou polyvalents ayant chacun un poids moléculaire moyen en nombre de jusqu'à 500 g/mol et ayant chacun une fonctionnalité moyenne en nombre de 1,5 à 6,
B) un composant contenant un ou plusieurs polyols ayant chacun un poids moléculaire moyen en nombre de 62 à 3 000 g/mol et ayant chacun une fonctionnalité moyenne en nombre de 1,8 à 6,
C) deux catalyseurs thermolatents ou plus, et
D) éventuellement des additifs,
**caractérisés en ce que** le composant B) contient 2,5 à 3,5 % en poids, par rapport au composant B), d'un agent antiagglomérant interne, et l'agent antiagglomérant interne est choisi dans le groupe constitué par les produits de condensation comprenant des groupes ester ayant chacun un poids moléculaire moyen en nombre de 650 à 3 000 g/mol, un indice d'acidité de moins de 5 et un indice hydroxyle de 28 à 112, et ayant chacun une fonctionnalité moyenne en nombre de 1,0 à 3,0, d'un ou de plusieurs acides gras contenant 10 à 30 atomes de carbone, d'un ou de plusieurs acides di- et/ou tricarboxyliques aliphatiques et/ou aromatiques de faible poids moléculaire, ayant chacun un poids moléculaire moyen en nombre de 50 à 500 g/mol et/ou leurs dérivés, et d'un ou de plusieurs alcools mono- ou polyvalents ayant chacun un poids moléculaire moyen en nombre de jusqu'à 500 g/mol, et ayant chacun une fonctionnalité moyenne en nombre de 1,5 à 6, la quantité totale utilisée des produits de condensation comprenant des groupes ester dans le composant composite fibreux étant de 5 à 5,7 % en poids, et le mélange réactionnel présentant à 25 °C une viscosité directement après le mélange de 200 à 700 mPas (mesurée selon DIN EN ISO 1342) et le rapport entre le nombre de groupes NCO du composant A) et le nombre de groupes OH du composant B) étant de 1:1 à 1,15:1.

2. Procédé de fabrication des composants composites fibreux selon la revendication 1, selon lequel
i) une ou plusieurs couches de fibres sont placées dans une ou les deux moitiés d'un moule,
ii) le moule est fermé,
iii) un mélange réactionnel constitué par
A) un ou plusieurs prépolymères de NCO organiques ayant une teneur en NCO de 27 à 31 % en poids et une teneur en monomères de 35 à 55 % en poids du groupe constitué par les produits de réaction de di- et/ou polyisocyanates aliphatiques, cycloaliphatiques et/ou aromatiques et 5 à 7,5 % en poids, par rapport au composant A), de produits de condensation comprenant des groupes ester ayant chacun un poids moléculaire moyen en nombre de 650 à 3 000 g/mol, un indice d'acidité de moins de 5, un indice hydroxyle de 28 à 112 et ayant chacun une fonctionnalité moyenne en nombre de 1,0 à 3,0, d'un ou de plusieurs acides gras contenant 10 à 30 atomes de carbone, d'un ou de plusieurs acides di- et/ou tricarboxyliques aliphatiques et/ou aromatiques de faible poids moléculaire, ayant chacun des poids moléculaires moyens en nombre de 50 à 500 g/mol, et/ou leurs dérivés, et d'un ou de plusieurs alcools mono- ou polyvalents ayant chacun un poids moléculaire moyen en nombre de jusqu'à 500 g/mol et ayant chacun une fonctionnalité moyenne en nombre de 1,5 à 6,
B) un composant contenant un ou plusieurs polyols ayant chacun un poids moléculaire moyen en nombre de 62 à 3 000 g/mol et ayant chacun une fonctionnalité moyenne en nombre de 1,8 à 6,
C) deux catalyseurs thermolatents ou plus, et
D) éventuellement des additifs,
le composant B) contenant 2,5 à 3,5 % en poids, par rapport au composant B), d'un agent antiagglomérant interne, et l'agent antiagglomérant interne étant choisi dans le groupe constitué par les produits de condensation comprenant des groupes ester ayant chacun un poids moléculaire moyen en nombre de 650 à 3 000 g/mol, un indice d'acidité de moins de 5 et un indice hydroxyle de 28 à 112, et ayant chacun une fonctionnalité moyenne en nombre de 1,0 à 3,0, d'un ou de plusieurs acides gras contenant 10 à 30 atomes de carbone, d'un ou de plusieurs acides di- et/ou tricarboxyliques aliphatiques et/ou aromatiques de faible poids moléculaire, ayant chacun un poids moléculaire moyen en nombre de 50 à 500 g/mol et/ou leurs dérivés, et d'un ou de plusieurs alcools mono- ou polyvalents ayant chacun un poids moléculaire moyen en nombre de jusqu'à 500 g/mol, et ayant chacun une fonctionnalité moyenne en nombre de 1,5 à 6, et
la quantité totale utilisée des produits de condensation comprenant des groupes ester dans le composant composite fibreux étant de 5 à 5,7 % en poids, et le mélange réactionnel présentant à 25 °C une viscosité directement après le mélange de 200 à 700 mPas (mesurée selon DIN EN ISO 1342) et le rapport entre le nombre de groupes NCO du composant A) et le nombre de groupes OH du composant B) étant de 1:1 à 1,15:1,
est introduit, éventuellement sous pression, dans le moule fermé éventuellement sous vide, la ou les couches de fibres étant ainsi imprégnées, et
iv) le mélange réactionnel de iii) est durci à une température de 50 °C à 120 °C, de préférence de 70 °C à 100 °C.
